# EUROPEAN PATENT APPLICATION

(11) **EP 4 166 451 A1**
(43) Date of publication of application: **19.04.2023**
(21) Application number: 22201195.9
(22) Date of filing: 12.10.2022
(51) Int. Cl.: B64D 15/12, C01B 32/158, C01B 32/168, H05B 3/14, H05B 3/34

(54) **AIRCRAFT HEATING SYSTEM FOR THERMALLY DISADVANTAGED ZONES**

(30) Priority: 14.10.2021 IN 202111046833
(71) Applicant: Goodrich Corporation, Charlotte, NC 28217-4578 (US)
(72) Inventor: GEORGE, Adam, Alliance, 44601 (US); ZADELL, Alex, Willoughby,, OH 44094 (US); BOTURA, Galdemir, Copley, 44321 (US); SLANE, Casey, Richwood, 43344 (US); TAYLOR, Andrew, Hudson,, OH 44236 (US)
(74) Representative: Dehns

(57) **Abstract**

A system for heating an aircraft surface having a thermally disadvantaged zone includes a carbon nano-tube (CNT) sheet heating element (70) having a power inlet configured to receive power from an external electrical power source and provide it to the CNT sheet heating element that extends across the thermally disadvantaged zone. The CNT sheet heating element is configured and arranged such that upon application of power from the external electrical power source to the CNT sheet heating element, the CNT sheet heating element produces a first heat output in a first zone and a second heat output in the thermally disadvantaged zone with the second heat output being greater than the first heat output.

## Description

### BACKGROUND

Exemplary embodiments pertain to the art of heating systems and, more particularly, to an aircraft heating system for thermally disadvantaged zones.

Certain aircraft components are prone to icing during flight. Ice buildup on, for example, a leading edge or other aircraft surface, can detract from aerodynamic performance. As such, most aircraft include deicing systems that are built into the surface that may experience ice buildup. A deicing system includes one or more heaters that are selectively activated to prevent ice buildup and/or melt any built up ice that may accumulate on a surface. The deicing system includes electric resistive heaters that may extend along an entire length of the surface. The electric resistive heaters may also be arranged in different heating zones.

Due to the construction of aircraft components, different sections of the surface may include different heating demands. That is, the heating demand near a rib may be greater than the heating demand between ribs. Other regions of the surface may include different heating demands as well. Currently, if additional heating is needed, instead of heating the regions with the different heating demand, the additional heat is applied to an entire zone. Increasing the heat applied to an entire zone presents a greater power demand which may require larger power generation systems.

### BRIEF DESCRIPTION

Disclosed is a system for heating an aircraft surface having a thermally disadvantaged zone. The system includes a carbon nano-tube (CNT) sheet heating element having a power inlet configured to receive power from an external electrical power source and provide it to the CNT sheet heating element that extends across the thermally disadvantaged zone. The CNT sheet heating element is configured and arranged such upon application of power from the external electrical power source to the CNT sheet heating element, the CNT sheet heating element produces a first heat output in a first zone and a second heat output in the thermally disadvantaged zone with the second heat output being greater than the first heat output.

Additionally, or alternatively, in this or other non-limiting examples, the power inlet includes a first bus bar and a second bus bar mounted to the CNT sheet heating element.

Additionally, or alternatively, in this or other non-limiting examples, the second zone includes a localized zone of increased power at the thermally disadvantaged zone of the aircraft surface.

Additionally, or alternatively, in this or other non-limiting examples, the CNT sheet heating element includes a first section including a first plurality of electrically non-conducting portions establishing the first heat output and a second section including a second plurality of electrically non-conducting portions establishing the second heat output.

Additionally, or alternatively, in this or other non-limiting examples, the first plurality of electrically non-conducting portions includes a first plurality of perforations and the second plurality of electrically non-conducting portions includes a second plurality of perforations.

Additionally, or alternatively, in this or other non-limiting examples, the CNT sheet heating element is integrated into a leading edge of an aircraft wing.

Additionally, or alternatively, in this or other non-limiting examples, the thermally disadvantaged zone defines an interruption in the leading edge.

Additionally, or alternatively, in this or other non-limiting examples, the interruption in the leading edge includes a seam in the leading edge.

Additionally, or alternatively, in this or other non-limiting examples, the interruption in the leading edge includes a mechanical fastener.

Also disclosed is an aircraft including a fuselage having a main body, a first wing a second wing, a tail, and a stabilizer. At least one of the first wing, the second wing, the tail, and the stabilizer including a thermally disadvantaged zone. The aircraft also includes an electrical power source and a system for heating a surface of at least one of the first wing and the second wing, the tail, and the stabilizer. The system includes a carbon nano-tube (CNT) sheet heating element including a power inlet configured to receive power from the electrical power source and provide it to the CNT sheet heating element that extends across the thermally disadvantaged zone. The CNT sheet heating element is configured and arranged such upon application of power from the electrical power source to the CNT sheet heating element, the CNT sheet heating element produces a first heat output in a first zone and a second heat output in the thermally disadvantaged zone, the second heat output being greater than the first heat output.

Additionally, or alternatively, in this or other non-limiting examples, the power inlet includes a first bus bar and a second bus bar mounted to the CNT sheet heating element.

Additionally, or alternatively, in this or other non-limiting examples, the second zone includes a localized zone of increased power at a thermally disadvantaged zone of the aircraft surface.

Additionally, or alternatively, in this or other non-limiting examples, the CNT sheet heating element includes a first section including a first plurality of electrically non-conducting portions establishing the first heat output and a second section including a second plurality of electrically non-conducting portions establishing the second heat output.

Additionally, or alternatively, in this or other non-limiting examples, the first plurality of electrically non-conducting portions includes a first plurality of perforations and the second plurality of electrically non-conducting portions includes a second plurality of perforations.

Additionally, or alternatively, in this or other non-limiting examples, the one of the first wing and the second wing, the tail, and the stabilizer includes at least one rib and a plurality of panels, the CNT sheet heating element is integrated into the plurality of panels.

Additionally, or alternatively, in this or other non-limiting examples, the thermally disadvantaged zone comprises a seam between two of the plurality of panels.

Additionally, or alternatively, in this or other non-limiting examples, the one of the first wing and the second wing, the tail, and the stabilizer includes at least one mechanical fastener joining one of the plurality of panels to the rib, the mechanical fastener defining the thermally disadvantaged zone.

Additionally, or alternatively, in this or other non-limiting examples, the CNT sheet heating element includes a length and a width that is less than the length, the thermally disadvantaged zone having a dimension that is less than half of the width of the CNT sheet heating element.

Further disclosed is a method of deicing a surface of an aircraft. The method includes activating a carbon nano-tube sheet heating element by providing power from an electrical power source, heating a first portion of an aircraft surface with a first section of the CNT sheet heating element having a first heat output and heating a thermally disadvantage zone of the aircraft surface with a second section of the CNT sheet heating element having a second heat output that is greater than the first heat output.

Additionally, or alternatively, in this or other non-limiting examples, heating the second portion of the aircraft surface includes heating a portion of the aircraft surface including mechanical fasteners.

### BRIEF DESCRIPTION OF THE DRAWINGS

The following descriptions should not be considered limiting in any way. With reference to the accompanying drawings, like elements are numbered alike:
FIG. 1 depicts an aircraft including a heating system for thermally disadvantaged zones, in accordance with a non-limiting example;
FIG. 2 depicts a partial cross-sectional view of a wing of the aircraft of FIG. 1 including the heating system for a thermally disadvantaged zone, in accordance with a non-limiting example;
FIG. 3 depicts thermally disadvantages zones on the leasing edge shown in FIG. 2;
FIG. 4 is a partial cross-section view of the wing of FIG. 2 showing a mechanical fastener joining a wing skin having a heating system to a wing rib, in accordance with a non-limiting example;
FIG. 5 is a graph depicting a first power density of the heating system for a first portion of the leading edge and a second power density of the heating system, in accordance with a non-limiting example; and
FIG. 6 depicts a first plurality of perforations in the heating system establishing the first power density and a second plurality of perforation in the heating system establishing the second power density, in accordance with a non-limiting example.

### DETAILED DESCRIPTION

A detailed description of one or more embodiments of the disclosed apparatus and method are presented herein by way of exemplification and not limitation with reference to the Figures.

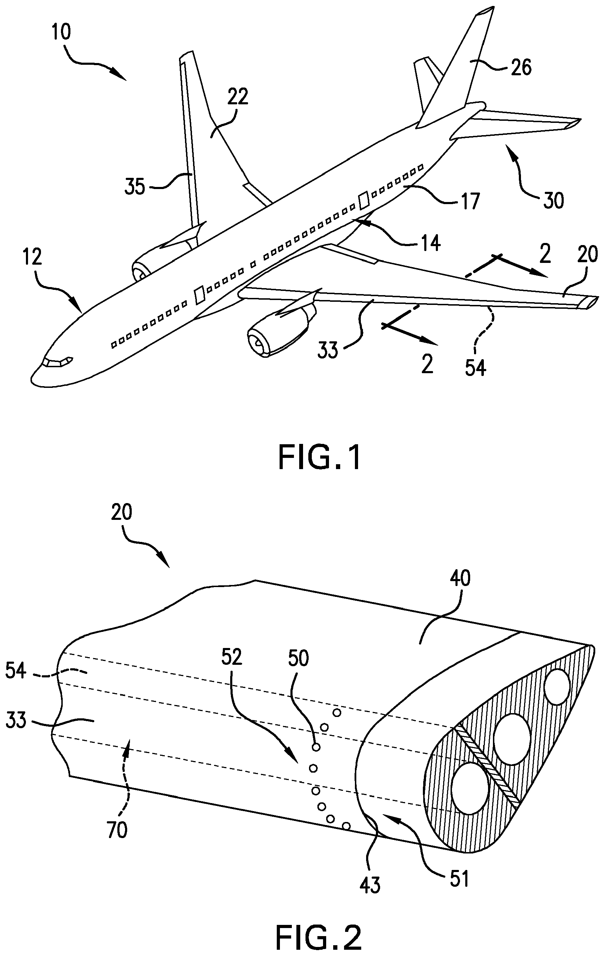

A vehicle, in accordance with a non-limiting example, is indicated generally at 10 in FIG. 1. Vehicle 10 is shown in the form of an aircraft 12 including a fuselage 14 having a main body 17. Aircraft 12 includes a first wing 20, a second wing 22, and a tail 26 that may support a stabilizer 30. First wing 20 includes a first leading edge 33 and second wing 22 includes a second leading edge 35. At this point, it should be understood that while described in terms of an aircraft, non-limiting examples described herein may be applied to other vehicle types. Further, non-limiting examples described herein may be applied to any structure that would benefit from multi power level heating.

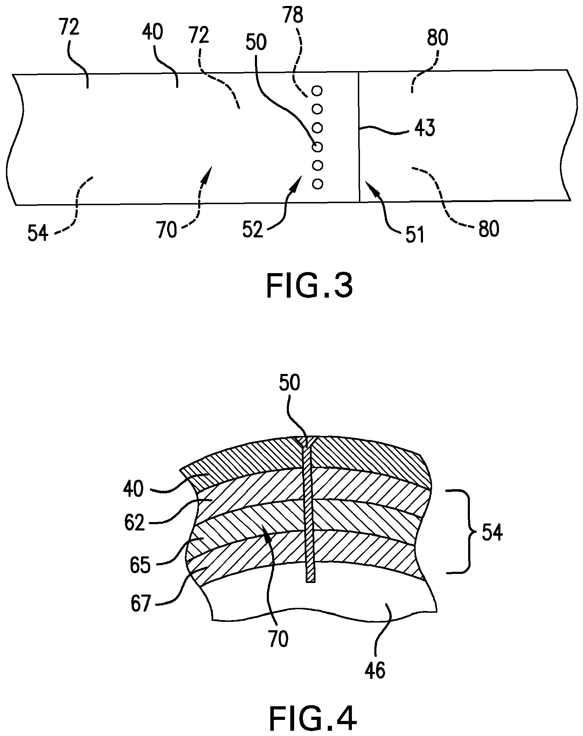

Reference will now follow to FIGS. 2-4, with continued reference to FIG. 1 in describing first leading edge 33 with an understanding that second leading edge 35 includes similar structure. Further, similar structure may be incorporated into additional aircraft surfaces such as surfaces on tail 26, surfaces on stabilizer 30, and/or surfaces on other portions of aircraft 12. Leading edge 33 is formed by a plurality of skins 40 that connect at seams 43. Skins 40 are connected to ribs, one of which is shown at 46 in FIG. 4, through mechanical fasteners 50. Seams 43 and mechanical fasteners 50 constitute interruptions in leading edge 33.

Each interruption in leading edge 33 defines a zone that necessitates greater heat delivery for deicing. Thus, in the non-limiting example shown, seam 43 defines a first thermally disadvantaged zone 51 and mechanical fasteners 50 define a second thermally disadvantaged zone 52. First thermally disadvantaged zone 51 and second thermally disadvantaged zone 52 include more structures than other portions of leading edge 33 and thus a greater heating capacity is needed to achieve a selected deicing effect. At this point it should be understood that while shown with two thermally disadvantaged zones, additional thermally disadvantaged zones may also exist at any surface interruption along leading edge 33 or other portions of aircraft 12.

In a non-limiting example, leading edge 33 includes a heating system 54 formed from a plurality of layers disposed beneath skin 40 as shown in FIG. 4. Heating system 54 includes a first composite layer 62, a heating element 65, and a second composite layer 67. Heating element 65 takes the form of an advanced carbon nano-tube (ACNT) sheet heating element or layer 70 that is sandwiched between first composite layer 62 and second composite layer 67. ACNT sheet heating element 70 includes a length and a width that is less than the length. Heating element 65 includes a first section 72, a second section 78, and a third section 80. Second section 78 is arranged between first section 72 and third section 80 and at one, another, or both of first thermally disadvantaged zone 51 and second thermally disadvantaged zone 52. Second section 78 defines a portion of heating element 65 including an increased power density. In a non-limiting example, each thermally disadvantaged zone may be less than about half the width of ACNT sheet heating element 70 and include an increased power density portion of heating element 65.

The term "power density" should be understood to describe a heat output from a region resulting from a selected density of non-conductive regions in ACNT sheet heating element 70. Thus, the "increased power density" should be understood to be a greater heat output achieved by providing a greater number of non-conductive regions in ACNT layer 80 at the thermally disadvantaged zone as opposed to other regions of ACNT layer 80 in other portions of leading edge 33

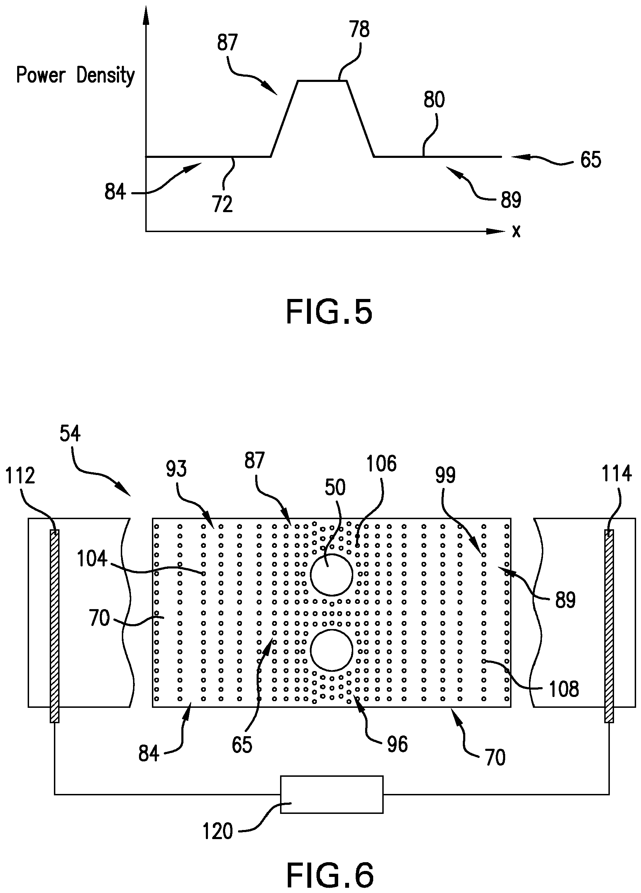

Referencing FIG. 5, in a non-limiting example, first section 72 includes a first power density zone 84 that provides a first non-zero heat output and is arranged at a first portion (not separately labeled) of leading edge 33. Second section 78 of heating element 65 includes a second power density zone 87 which provides a second heat output that is greater than heating output from the first power density zone 84 and is arranged at a second portion (also not separately labeled) of leading edge 33. Third section 80 of heating element 65 includes a third power density zone 89 which provides a third heat output that is less than the heat output from second power density zone 87 arranged at a third portion (not separately labeled) of leading edge 33. The third heat output may be substantially equal to the first heat output. Second power density zone 87 may have a localized power density that is between about 1.25 and 10 times greater than the power density in first power density zone 74 and third power density zone 89.

In a non-limiting example, each of the first power density zone 84, the second power density zone 87, and the third power density zone 89 are achieved through a single power input. That is, ACNT sheet heating element 70 may achieve different heating zones through a single power input into heating element 65 with no appreciable change in overall heat flux. That is, the localized change in power density does not alter an overall heat flux of ACNT sheet heating element 70 by more than about 10% to about 15%.

In a non-limiting example illustrated in FIG. 6, first power density zone 84 in ACNT sheet heating element 70 is established by forming a first plurality of electrically non-conducting portions 93 in ACNT sheet heating element 70, second power density zone 87 is established by a second plurality of electrically non-conducting portions 96 in ACNT sheet heating element 70, and third power density zone 89 is established by a third plurality of electrically non-conducting portions 99 in ACNT sheet heating element 70. In a non-limiting example, first plurality of electrically non-conducting portions 93 constitute a first plurality of perforations 104, second plurality of electrically non-conducting portions 96 constitute a second plurality of perforations 106, and third plurality of electrically non-conducting portions 99 constitute a third plurality of perforations 108. Second plurality of perforations 106 are greater in number and density than both the first plurality of perforations 104 and the third plurality of perforations 108. ACNT sheet heating element 70 is further shown to include power inlet shown in the form of a first bus bar 112 and a second bus bar 114. First bus bar 112 and second bus bar 114 are connected to an electrical power source 120 that provides power to ACNT sheet heating element 70.

With this construction, the second plurality of perforations 106 establish a localized zone of increased resistance at the thermally disadvantaged zone(s) that results in a localized heat output increase. In a non-limiting example, the localized heat output increase is created in a zone that extends about 4 inches (10 cm) around the thermally disadvantaged zone. In another non-limiting example, the localized heat output increase is created in a zone that extends between about 1 inch (2.5 cm) and about 2 inches (5 cm) around the thermally disadvantaged zone. That is, with the same electrical input from electrical power source 120, ANCT sheet heating element 70 can produce a first non-zero heat output at a first portion of leading edge 33 and, due to the greater density of perforations 106 produce an increased heat output at the thermally disadvantaged zones.

In a non-limiting example, it should be understood that the increase in power at the thermally disadvantaged zone is not due to an increase or different electrical input. The localized heat output increase in the thermally disadvantaged zone(s) allows for a single heating element to provide multiple power densities with a single power input. As a result, the number of heating elements in an aircraft may be reduced along with systems for operating the heating elements. Further, it should be understood that while shown and described in connection with aircraft surfaces, non-limiting examples may be designed to address heating needs for other systems possessing thermally disadvantaged zones.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present disclosure. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for heating an aircraft surface having a thermally disadvantaged zone, the system comprising:
a carbon nano-tube, CNT, sheet heating element (70) including a power inlet configured to receive power from an external electrical power source and provide it to the CNT sheet heating element that extends across the thermally disadvantaged zone,
wherein the CNT sheet heating element is configured and arranged such upon application of power from the external electrical power source to the CNT sheet heating element, the CNT sheet heating element produces a first heat output in a first zone and a second heat output in the thermally disadvantaged zone, the second heat output being greater than the first heat output.

2. The system according to claim 1, wherein the power inlet includes a first bus bar and a second bus bar mounted to the CNT sheet heating element.

3. The system according to claim 2, wherein the second zone includes a localized zone of increased power at the thermally disadvantaged zone of the aircraft surface.

4. The system according to claim 2, wherein the CNT sheet heating element includes a first section (72) including a first plurality of electrically non-conducting portions establishing the first heat output and a second section (78) including a second plurality of electrically non-conducting portions establishing the second heat output.

5. The system according to claim 4, wherein the first plurality of electrically non-conducting portions includes a first plurality of perforations and the second plurality of electrically non-conducting portions includes a second plurality of perforations.

6. The system according to any preceding claim, wherein the CNT sheet heating element is integrated into a leading edge (33) of an aircraft wing (20).

7. The system according to claim 3, wherein the thermally disadvantaged zone defines an interruption in the leading edge.

8. The system according to claim 7, wherein the interruption in the leading edge includes a seam (43) in the leading edge.

9. The system according to claim 7, wherein the interruption in the leading edge includes a mechanical fastener (50).

10. An aircraft comprising:
a fuselage (14) including a main body (17), a first wing (20) a second wing (22), a tail (26), and a stabilizer (30), at least one of the first wing, the second wing, the tail, and the stabilizer including a thermally disadvantaged zone;
an electrical power source (120); and
a system as claimed in any preceding claim for heating a surface of at least one of the first wing and the second wing, the tail, and the stabilizer

11. The aircraft according to claim 10, wherein the one of the first wing and the second wing, the tail, and the stabilizer includes at least one rib and a plurality of panels, the CNT sheet heating element is integrated into the plurality of panels.

12. The aircraft according to claim 11, wherein the one of the first wing and the second wing, the tail, and the stabilizer includes at least one mechanical fastener joining one of the plurality of panels to the rib, the mechanical fastener defining the thermally disadvantaged zone.

13. The aircraft according to claim 12, wherein the CNT sheet heating element includes a length and a width that is less than the length, the thermally disadvantaged zone having a dimension that is less than half of the width of the CNT sheet heating element.

14. A method of deicing a surface of an aircraft, the method comprising:
activating a carbon nano-tube sheet heating element by providing power from an electrical power source;
heating a first portion of an aircraft surface with a first section of the CNT sheet heating element having a first heat output; and
heating a thermally disadvantage zone of the aircraft surface with a second section of the CNT sheet heating element having a second heat output that is greater than the first heat output.

15. The method of claim 14, wherein heating the second portion of the aircraft surface includes heating a portion of the aircraft surface including mechanical fasteners.
